# EUROPEAN PATENT SPECIFICATION

(11) **EP 1 888 881 B1**
(45) Date of publication and mention of the grant of the patent: **11.04.2012**
(21) Application number: 06744123.8
(22) Date of filing: 06.06.2006
(51) Int. Cl.: F01D 17/14, F02C 6/12

(54) **VARIABLE GEOMETRY TURBINE**
TURBINE MIT VARIABLER GEOMETRIE
TURBINE À GÉOMÉTRIE VARIABLE

(30) Priority: 07.06.2005 GB 0511613; 14.07.2005 GB 0514465
(43) Date of publication of application: 20.02.2008
(73) Proprietor: Cummins Turbo Technologies Ltd, Huddersfield, West Yorkshire HD1 6RA (GB)
(72) Inventor: PARKER, John Frederick, Huddersfield, West Yorkshire HD1 6RA (GB); LUCK, David, Huddersfield, West Yorkshire HD1 6RA (GB); BROWN, David H., Huddersfield, West Yorkshire HD1 6RA (GB)
(74) Representative: Dauncey, Mark Peter
(86) International application number: PCT/GB2006/002069
(87) International publication number: WO 2006/131724

(56) References cited:
- EP-A- 0 654 587
- US-B1- 6 203 272
- US-B1- 6 776 574
- PATENT ABSTRACTS OF JAPAN vol. 010, no. 014 (M-447), 21 January 1986 (1986-01-21) -& JP 60 175707 A (NISSAN JIDOSHA KK), 9 September 1985 (1985-09-09)

## Description

The present invention relates to a variable geometry turbine, particularly, but not exclusively, for use in a turbocharger of an internal combustion engine.

### BACKGROUND OF THE INVENTION

Turbochargers are well known devices for supplying air to the intake of an internal combustion engine at pressures above atmospheric pressure (boost pressures). A conventional turbocharger essentially comprises an exhaust gas driven turbine wheel mounted on a rotatable shaft within a turbine housing. Rotation of the turbine wheel rotates a compressor wheel that is mounted on the other end of the shaft and within a compressor housing. The compressor wheel delivers compressed air to the engine intake manifold. The turbocharger shaft is conventionally supported by journal and thrust bearings, including appropriate lubricating systems, located within a central bearing housing connected between the turbine and compressor wheel housings.

In known turbochargers, the turbine comprises a turbine chamber within which the turbine wheel is mounted, an annular inlet passageway defined between facing radial walls arranged around the turbine chamber, an inlet arranged around the inlet passageway, and an outlet passageway extending from the turbine chamber. The passageways and chambers communicate in such a way that pressurised exhaust gas admitted to the inlet chamber flows through the inlet passageway to the outlet passageway via the turbine and rotates the turbine wheel. It is also well known to trim turbine performance by providing vanes, referred to as nozzle vanes, in the inlet passageway so as to deflect gas flowing through the inlet passageway towards the direction of rotation of the turbine wheel.

Turbines may be of a fixed or variable geometry type. Variable geometry turbines differ from fixed geometry turbines in that the size of the inlet passageway can be varied to optimise gas flow velocities over a range of mass flow rates so that the power output of the turbine can be varied to suit varying engine demands. For instance, when the volume of exhaust gas being delivered to the turbine is relatively low, the velocity of the gas reaching the turbine wheel is maintained at a level that ensures efficient turbine operation by reducing the size of the annular inlet passageway.

In one known type of variable geometry turbine, an axially moveable wall member, generally referred to as a "nozzle ring", defines one wall of the inlet passageway. The position of the nozzle ring relative to a facing wall of the inlet passageway is adjustable to control the axial width of the inlet passageway. Thus, for example, as gas flowing through the turbine decreases, the inlet passageway width may also be decreased to maintain gas velocity and to optimise turbine output. Such nozzle rings essentially comprise a radially extending wall and inner and outer axially extending annular flanges. The annular flanges extend into an annular cavity defined in the turbine housing, which is a part of the housing that in practice is provided by the bearing housing, which accommodates axial movement of the nozzle ring.

The nozzle ring may be provided with vanes that extend into the inlet passageway and through slots provided on the facing wall of the inlet passageway to accommodate movement of the nozzle ring. Alternatively, vanes may extend from the fixed wall through slots provided in the nozzle ring. Generally the nozzle ring is supported on rods extending parallel to the axis of rotation of the turbine wheel and is moved by an actuator that axially displaces the rods. Various forms of actuators are known for use in variable geometry turbines, including pneumatic, hydraulic and electric actuators that are mounted externally of the turbocharger and connected to the variable geometry system via appropriate linkages.

When a conventional turbine is in use, with gas passing through the inlet passageway, pressure is applied to the face of the nozzle ring tending to force the nozzle ring into the annular cavity. There is pressure in the annular cavity in which the nozzle ring sits and the actuating mechanism must overcome the effect of this pressure if the position of the nozzle ring is to be controlled accurately. Moving the nozzle ring closer to the facing wall of the passageway, so as to further reduce the width of the passageway and increase the speed of the air flow, tends to increase the load applied to the face of the nozzle ring. Some actuators for turbines, for example electric actuators, are able to provide only a relatively limited force to move a nozzle ring when compared to pneumatic actuators. In some operating conditions, the force needed to be supplied by the actuator can exceed the capability of the actuator. Furthermore, it is also desirable to ensure that the resultant force on the nozzle ring is unidirectional.

EP 0654587 discloses a variable geometry turbine with pressure balance apertures in the nozzle ring between nozzle vanes. The forces on the nozzle ring are created by the pressure on the nozzle ring face, the pressure in the cavity behind the nozzle ring, and by the actuator. The function of the pressure balance apertures is to ensure that the cavity behind the nozzle ring is at a pressure substantially equal to, but always slightly less than, the pressure acting on the front face of the nozzle ring to ensure a small but unidirectional force on the nozzle ring.

The turbine nozzle ring is usually provided with an annular array of vanes extending across the turbine inlet. Air flowing through the inlet flows radially between adjacent vanes that can therefore be regarded as defining a vane passage. The turbine inlet has a reduced radial flow area in the region of the vane passage with the effect that the inlet gas speed increases through the vane passage with a corresponding drop in pressure in this region of the nozzle ring. Accordingly, the pressure balance holes as described in EP 0 654 587 are located between vanes in the sense that the inner and/or outer extremity of each balance aperture lies within the inner or outer radial extent of the nozzle guide vane passage.

It has been found that even with the provision of pressure balance holes as disclosed in EP 0 654 587, the force on the nozzle ring can fluctuate undesirably as the pressure within the turbine inlet fluctuates due to exhaust pulses being released into the exhaust manifold of the vehicle engine by the opening and closing action of the exhaust valves. This force fluctuation is present both when the turbocharger is operating in an engine "fired" mode and also an engine "braking" mode. For instance, in braking mode the force fluctuation can give rise to an undesirable fluctuation in the breaking torque produced.

The terms "fired" mode and "braking" mode are well known to the ordinarily skilled artisan in this field.

JP60175707A discloses a different type of mechanism to vary the geometry of a turbine known as a "swing vane" variable geometry turbine with pressure balancing holes defined by a moveable wall member.

It is an object of the present invention to obviate or mitigate the above disadvantage.
In accordance with the present invention there is provided a variable geometry turbine comprising a turbine wheel supported in a housing for rotation about an axis, an axially movable annular wall member mounted within a cavity provided within the housing, an annular inlet passageway extending radially inwards towards the turbine wheel and defined between a radial face of the movable wall member and an opposing wall of the housing, the movable wall member being axially movable relative to the housing by an actuator to vary the turbine geometry by varying the axial width of the annular inlet passageway, an array of inlet guide vanes extending between the radial face of the moveable wall member and opposing wall of the housing defining a radial vane passage, a first circumferential array of apertures provided through said radial face of the moveable wall member, each aperture of said first array of apertures lying substantially within the vane passage, and a second circumferential array of apertures characterised in that the second array of apertures is provided through said radial face of the moveable wall member, each aperture of said second array of apertures lying substantially upstream or downstream of said first array of apertures relative to the direction of flow through the annular inlet passageway, such that the annular inlet passageway and said cavity are in fluid communication via both the first and second sets of apertures, wherein there are fewer apertures in said second array than in said first array.

It has been found that the force amplitude at the actuator Interface caused by an exhaust pulse passing through the turbine stage can be reduced by over 75% in the case of a braking condition and by over 80% in the case of a fired condition by the provision of primary and secondary pressure balance apertures in the nozzle ring when compared with the provision of primary pressure balance apertures, alone. Thus, the present invention enables a low mean force on the nozzle ring to be present over a range of engine speeds.

A specific embodiment of the present invention will now be described, by way of example, with reference to the accompanying drawings.
Figure 1a is an axial cross-section of a variable geometry turbine, in accordance with the present invention;
Figure 1b is a cross-section, of a part of the turbine of figure 1a;
Figure 1c is a perspective view of the nozzle ring shown in figures 1a and 1b ;
Figure 2 is an axial cross-section of a part of a variable geometry turbine which, while not forming part of the present inventions, shares features therewith;
Figure 3 is an axial cross-section of a part of a second embodiment of the invention;
Figure 4 is an axial cross-section of a part of a third embodiment of the invention.

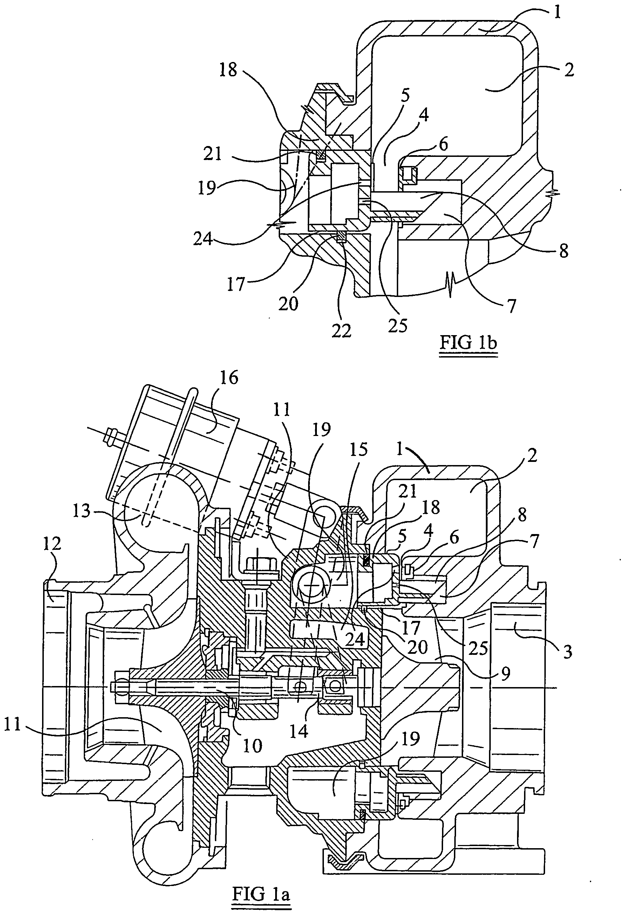

Referring to figure 1a, the illustrated variable geometry turbine comprises a turbine housing 1 defining an inlet chamber 2 to which gas from an internal combustion engine (not shown) is delivered. The exhaust gas flows from the inlet chamber 2 to an outlet passageway 3 via an annular inlet passageway 4. The inlet passageway 4 is defined on one side by the face of a movable annular wall member 5, commonly referred to as a "nozzle ring," and on the opposite side by an annular shroud 6, which covers the opening of an annular recess 7 in the facing wall.

Gas flowing from the inlet chamber 2 to the outlet passageway 3 passes over a turbine wheel 9 and as a result torque is applied to a turbocharger shaft 10 that drives a compressor wheel 11. Rotation of the compressor wheel 11 pressurizes ambient air present in an air inlet 12 and delivers the pressurized air to an air outlet 13 from which it is fed to an internal combustion engine (not shown). The speed of the turbine wheel 9 is dependent upon the velocity of the gas passing through the annular inlet passageway 4. For a fixed rate of mass of gas slowing into the inlet passageway, the gas velocity is a function of the width of the inlet passageway 4, the width being adjustable by controlling the axial portion of the nozzle ring 5. As the width of the inlet passageway 4 is reduced, the velocity of the gas passing through it increases. Figure 1a shows the annular inlet passageway 4 closed down to a minimum width, whereas in figure 1b the inlet passageway 4 is shown fully open.

The nozzle ring 5 supports an array of circumferentially and equally spaced vanes 8, each of which extends across the inlet passageway 4. The vanes 8 are orientated to deflect gas flowing through the inlet passageway 4 towards the direction of rotation of the turbine wheel 9. When the nozzle ring 5 is proximate to the annular shroud and to the facing wall, the vanes 8 project through suitably configured slots in the shroud 6 and into the recess 7.

A pneumatically operated actuator 16 is operable to control the position of the nozzle ring 5 via an actuator output shaft (not shown), which is linked to a stirrup member (not shown). The stirrup member in turn engages axially extending guide rods (not shown) that support the nozzle ring 5. Accordingly, by appropriate control of the actuator 16 the axial position of the guide rods and thus of the nozzle ring 5 can be controlled. It will be appreciated that electrically operated actuators could be used in place of a pneumatically operated actuator.

The nozzle ring 5 has axially extending inner and outer annular flanges 17 and 18 respectively that extend into an annular cavity 19 provided in the turbine housing. Inner and outer sealing rings 20 and 21, respectively, are provided to seal the nozzle ring 5 with respect to inner and outer annular surfaces of the annular cavity 19, while allowing the nozzle ring 5 to slide within the annular cavity 19. The inner sealing ring 20 is supported within an annular groove 22 formed in the inner surface of the cavity 19 and bears against the inner annular flange 17 of the nozzle ring 5, whereas the outer sealing ring 21 is supported within an annular groove 23 provided within the annular flange 18 of the nozzle ring 5 and bears against the radially outermost internal surface of the cavity 19. It will be appreciated that the inner sealing ring 20 could be mounted in an annular groove in the flange 17 rather than as shown, and/or that the outer sealing ring 21 could be mounted within an annular groove provided within the outer surface of the cavity rather than as shown.

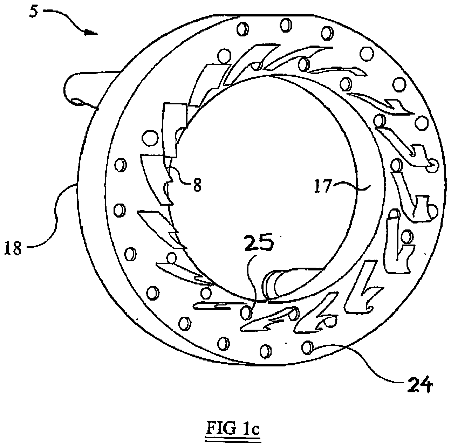

As shown in figure 1c the nozzle ring 5 is provided with first and second circumferential arrays of pressure balance apertures 24, 25, the first set of pressure balance apertures 25 being disposed within the vane passage defined between adjacent vanes 8. The second set of pressure balance apertures 24 is disposed outside the radius of the nozzle vane passage.

The first and second pressure balance apertures 24, 25 allow the annular inlet passageway to be in fluid communication with the annular cavity 19, which is otherwise sealed off from inlet passageway 4 by sealing rings 20 and 21.

It has been found that the force amplitude at the actuator interface caused by exhaust pulses passing through the turbine stage can be reduced by over 80% by the addition of the second set of pressure balance apertures 24, when compared with the provision of a first set of pressure balance apertures 24 (located in the vane passage), alone.

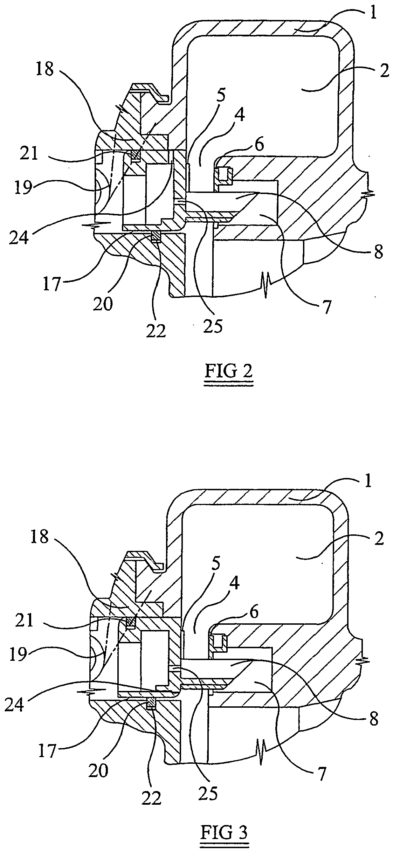

Figure 2 illustrates a variable geometry turbine which, while not part of the present invention, shares many features therewith and 3 illustrates a second embodiment of the present invention. As with figures 1a to 1c, only detail of the nozzle ring/inlet passageway region of the turbine is illustrated. Where appropriate, the same preference numerals are used in figures 2 and 3 as are used in figures 1a and 1b. Figures 2 and 3 each illustrate turbines that differ from the embodiment of figures 1a and 1b in only one respect. In figure 2, the second pressure balance apertures 24 are provided in the outer flange 18 of the nozzle ring 5, while in the embodiment of figure 3, the second pressure balance apertures 24 are provided radially inward of the nozzle vane passage vanes 8 on the nozzle ring 5.

It will be appreciated that the second array of pressure balance apertures 24 may be provided at other radial positions. For instance, the second pressure balance apertures upstream of the first set of pressure balance apertures may at least partially lie within the vane passage, for example, a portion of each second pressure balance aperture may lie within the vane passage. Similarly, where the second set of pressure balance apertures is provided downstream of the first array of pressure balance apertures, the second pressure balance apertures may lie wholly or partially within the vane passage as opposed to outside the vane passage, as illustrated in Figure 2. For instance, each second pressure balance aperture could lie entirely within the vane passage.

In some embodiments of the invention there may be overlap between the radial extent of the first pressure balance apertures and the radial extent of the second pressure balance apertures. For instance, a second array of pressure balance apertures upstream of the first pressure balance apertures may each have a radially inner most edge at a radius less than the radially outermost edge of each of the first pressure balance apertures. Similarly, where the second array of pressure balance apertures is provided downstream of the first pressure balance apertures, each pressure balance aperture may have a radially outer edge lying at a greater radius than the radially inner edge of each first pressure balance aperture.

It should be appreciated that the second pressure balance apertures 24 can be located within or outside the vane passage or in the inner or outer annular flanges.

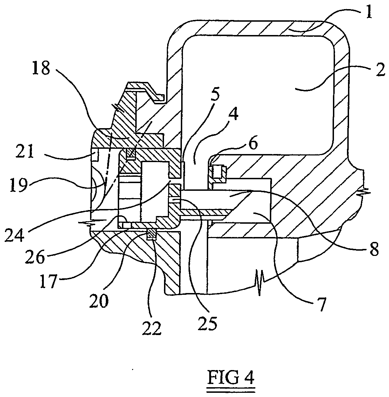

Figure 4 illustrates a third embodiment of the present invention. As with figures 1, 2 and 3, only detail of the nozzle ring/inlet passageway region of the turbine is illustrated. Where appropriate, the same reference numerals are used in figure 4 as were used in the previous figures. Figure 4 illustrates an application of the invention that differs from the embodiment of figures 1a and 1b in one important respect: a bypass path is provided as disclosed in EP 1435434.

EP 1435434 discloses a turbine with a nozzle ring that is modified by the provision of a circumferential array of bypass apertures. The positioning of the bypass apertures is such that they lie on the side of the nozzle ring seal arrangement remote from the turbine inlet passageway except when the nozzle ring approaches a closed position used in an engine braking mode, at which point the apertures pass the seal. This opens a bypass flow path allowing some exhaust gas to flow from the inlet chamber to the turbine wheel via the cavity behind the nozzle ring rather than through the inlet passageway. The exhaust gas flow that bypasses the inlet passageway, and nozzle vanes, will do less work than the exhaust gas flow through the inlet passageway particularly since the vanes do not deflect the gas. In other words, as soon as the bypass apertures are brought into communication with the inlet passageway there is an immediate reduction in the efficiency of the turbocharger and corresponding drop in compressor outflow pressure (boost pressure) with an accompanying drop in engine cylinder pressure.

Thus, the provision of the inlet bypass apertures 26 will have no effect on the efficiency of the turbocharger under normal operating conditions, but when the turbine is operated in an engine braking mode, and the inlet passageway is reduced minimum, the bypass apertures will facilitate a reduction in inlet passageway 4 axial width without over pressurising the engine cylinders. It should be appreciated that the efficiency reducing effect on the turbocharger can be predetermined by appropriate selection of the number, size, and shape of the bypass apertures 26.

Referring again to figure 4, in accordance with the teaching of EP 1 435 434, bypass apertures 26 are provided through the inner flange 17 of the nozzle ring 5 in addition to first and second arrays of pressure balance apertures 25, 24 in accordance with the present invention.

In this embodiment the bypass passage is formed by the bypass apertures 26 in combination with the pressure balance apertures 24 and 25. This is one particular suggestion made in EP 1 435 434, although in that instance, only a single set of bypass apertures was provided within the vane passage, but the present invention can be combined with other embodiments of the invention disclosed in EP 1 435 434. In other words, the "dual" array of pressure balance apertures in accordance with the present invention can be applied wherever a single array of pressure balance apertures might otherwise be provided.

The first and second sets of apertures may have substantially the same sizes and shapes, or they may have substantially different sizes and/or shapes. There are fewer apertures in the second set than in the first set, and it is preferred that the apertures in the second set are smaller than the apertures in the first set.

In some embodiments, the first set of apertures may lie entirely within the vane passage, but in other embodiments a portion of each of the first set of apertures may lie outside the vane passage, either radially inward or outward thereof. Similarly, the second set of apertures will in some embodiments lie entirely outside the vane passage, but in other embodiments they may lie at least partially within the vane passage either upstream or downstream of the first set of apertures. For instance, it is possible that in some embodiments the first set of apertures may radially overlap with the second set of apertures in terms of their radial extent. Apertures may have a variety of shapes and need not necessarily be circular as described in the illustrated embodiments.

## Claims

1. A variable geometry turbine comprising a turbine wheal (9) supported in a housing (1) for rotation about an axis, an axially movable annular wall member (5) mounted within a cavity (19) provided within the housing (1), an annular inlet passageway (4) extending radially inwards towards the turbine wheel (9) and defined between a radial face of the movable wall member (5) and an opposing wall of the housing, the movable wall member (5) being axially movable relative to the housing (1) by an actuator to vary the turbine geometry by varying the axial width of the annular inlet passageway (4), an array of inlet guide vanes (8) extending between the radial face of the moveable wall member (5) and opposing wall of the housing (1) defining a radial vane passage, a first circumferential array of apertures (25) provided through said radial face of the moveable wall member (5), each aperture (25) of said first array of apertures (25) lying substantially within the vane passage, and a second circumferential array of apertures (24) **characterised in that** the second array of apertures is provided through said radial face of the moveable wall member (5), each aperture (24) of said second array of apertures (24) lying substantially upstream or downstream of said first array of apertures (25) relative to the direction of flow through the annular inlet passageway (4), such that the annular inlet passageway (4) and said cavity (19) are in fluid communication via both the first and second sets of apertures (24, 25), wherein there are fewer apertures (24) in said second array (24) than in said first array (25).

2. A variable geometry turbine according to claim 1, wherein the moveable wall member (5) is moveable between a fully opened position and a fully closed position, wherein both the first and second sets of apertures (24, 25) are in fluid communication with both the annular inlet passageway (4) and the cavity (19) for all axial positions of the movable wall member (5) between the fully opened and fully closed positions.

3. A variable geometry turbine according to claim 1 or claim 2, wherein each aperture (25) of the first array of apertures (25) is centered on a first radius and each aperture (24) of said second array of apertures (24) is centered on a second radius, and wherein the second radius is greater than the first radius.

4. A variable geometry turbine according to claim 3, wherein said second radius is greater than the radius of the radially outer extent of said vanes (8).

5. A variable geometry turbine according to claim 1 or claim 2, wherein each aperture (25) of the first array of apertures (25) is centered on a first radius and each aperture (24) of said second array of apertures (24) is centered on a second radius, and wherein the second radius is smaller than the first radius.

6. A variable geometry turbine according to claim 5, wherein said second radius is smaller than the radius of the radially inner extent of said vanes (8).

7. A variable geometry turbine according to any preceding claim, wherein the entire area of each aperture (25) in said first array (25) lies within the vane passage.

8. A variable geometry turbine according to any preceding claim, wherein each aperture (24) of the second array of apertures (24) lies at least substantially outside said vane passage.

9. A variable geometry turbine according any preceding claim, wherein the full area of each aperture (24) in the second array (24) lies outside the vane passage.

10. A variable geometry turbine according to claim 5, wherein each aperture (24) of the second array of apertures (24) lies at least substantially within said vane passage.

11. A variable geometry turbine according to claim 10, wherein each aperture (24) of the second array of apertures (24) lies entirely within said vane passage.

12. A variable geometry turbine according to any preceding claim, wherein each aperture (24) in said second array (24) has a smaller area than each aperture (25) in said first array (25).

13. A variable geometry turbine according to claim 12, wherein the apertures (24, 25) are circular and the diameter of each aperture (24) in the second array of apertures (24) is less than about 70% of the diameter of the apertures (25) in the first array of apertures (25).

14. A variable geometry turbine according to any preceding claim, wherein the radial extent of the second array of apertures (24) overlaps the radial extent of the first array of apertures (25).

## Patentansprüche

1. Turbine mit variabler Geometrie, die aufweist: ein Turbinenrad (9), das im Gehäuse (1) für eine Drehung um eine Achse getragen wird; ein axial bewegliches ringförmiges Wandelement (5), das innerhalb eines im Gehäuse (1) vorhandenen Hohlraumes (19) montiert ist; einen ringförmigen Eintrittsdurchgang (4), der sich radial nach innen in Richtung des Turbinenrades (9) erstreckt und zwischen einer radialen Fläche des beweglichen Wandelementes (5) und einer gegenüberliegenden Wand des Gehäuses definiert wird, wobei das bewegliche Wandelement (5) relativ zum Gehäuse (1) mittels eines Betätigungselementes axial beweglich ist, um die Turbinengeometrie durch Variieren der axialen Breite des ringförmigen Eintrittsdurchgangs (4) zu variierten; eine Anordnung von Eintrittsleitschaufeln (8), die sich zwischen der radialen Fläche des beweglichen Wandelementes (5) und der gegenüberliegenden Wand des Gehäuses (1) erstrecken, wobei ein radialer Schaufelkanal definiert wird; eine erste periphere Anordnung von Öffnungen (25), die durch die radiale Fläche des beweglichen Wandelementes (5) vorhanden sind, wobei jede Öffnung (25) der ersten Anordnung von Öffnungen (25) im Wesentlichen innerhalb des Schaufelkanals liegt; und eine zweite periphere Anordnung von Öffnungen (24), **dadurch gekennzeichnet, dass** die zweite Anordnung von Öffnungen durch die radiale Fläche des beweglichen Wandelementes (5) vorhanden ist, wobei jede Öffnung (24) der zweiten Anordnung von Öffnungen (24) im Wesentlichen stromaufwärts oder stromabwärts von der ersten Anordnung von Öffnungen (25) relativ zur Strömungsrichtung durch den ringförmigen Eintrittsdurchgang (4) liegt, so dass der ringförmige Eintrittsdurchgang (4) und der Hohlraum (19) in Fluidverbinduzrg mittels der ersten und zweiten Reihe von Öffnungen (24, 25) sind, wobei in der zweiten Anordnung (24) weniger Öffnungen (24) vorhanden sind als in der ersten Anordnung (25).

2. Turbine mit variabler Geometrie nach Anspruch 1, bei der das bewegliche Wandelement (5) zwischen einer vollständig geöffneten Position und einer vollständig geschlossenen Position beweglich ist, wobei sowohl die erste als auch zweite Reihe von Öffnungen (24, 25) in Fluidverbindung mit sowohl dem ringförmigen Eintrittsdurchgang (4) als auch dem Hohlraum (19) für alle axialen Positionen des beweglichen Wandelementes (5) zwischen der vollständig geöffneten und der vollständig geschlossenen Position sind.

3. Turbine mit variabler Geometrie nach Anspruch 1 oder Anspruch 2, bei der jede Öffnung (25) der ersten Anordnung von Öffnungen (25) auf einen ersten Radius zentriert ist, und wobei jede Öffnung (24) der zweiten Anordnung von Öffnungen (24) auf einen zweiten Radius zentriert ist, und wobei der zweite Radius größer ist als der erste Radius.

4. Turbine mit variabler Geometrie nach Anspruch 3, bei der der zweite Radius größer ist als der Radius der radial äußeren Ausdehnung der Schaufeln (8).

5. Turbine mit variabler Geometrie nach Anspruch 1 oder Anspruch 2, bei der jede Öffnung (25) der ersten Anordnung von Öffnungen (25) auf einen ersten Radius zentriert ist, und wobei jede Öffnung (24) der zweiten Anordnung von Öffnungen (24) auf einen zweiten Radius zentriert ist, und wobei der zweite Radius kleiner ist als der erste Radius.

6. Turbine mit variabler Geometrie nach Anspruch 5, bei der der zweite Radius kleiner ist als der Radius der radial inneren Ausdehnung der Schaufeln (8).

7. Turbine mit variabler Geometrie nach einem der vorhergehenden Ansprüche, bei der die gesamte Fläche einer jeden Öffnung (25) in der ersten Anordnung (25) innerhalb des Schaufelkanals liegt.

8. Turbine mit variabler Geometrie nach einem der vorhergehenden Ansprüche, bei der jede Öffnung (24) der zweiten Anordnung von Öffnungen (24) mindestens im Wesentlichen außerhalb des Schaufelkanals liegt.

9. Turbine mit variabler Geometrie nach einem der vorhergehenden Ansprüche, bei der die volle Fläche einer jeden Öffnung (24) in der zweiten Anordnung (24) außerhalb des Schaufelkanals liegt.

10. Turbine mit variabler Geometrie nach Anspruch 5, bei der jede Öffnung (24) der zweiten Anordnung von Öffnungen (24) mindestens im Wesentlichen innerhalb des Schaufelkanals liegt.

11. Turbine mit variabler Geometrie nach Anspruch 10, bei der jede Öffnung (24) der zweiten Anordnung von Öffnungen (24) vollständig innerhalb des Schaufelkanals liegt.

12. Turbine mit variabler Geometrie nach einem der vorhergehenden Ansprüche, bei der jede Öffnung (24) in der zweiten Anordnung (24) eine kleinere Fläche als jede Öffnung (25) in der ersten Anordnung (25) aufweist.

13. Turbine mit variabler Geometrie nach Anspruch 12, bei der die Öffnungen (24, 25) kreisförmig sind und der Durchmesser einer jeden Öffnung (24) in der zweiten Anordnung von Öffnungen (24) kleiner als etwa 70 % des Durchmessers der Öffnungen (25) in der ersten Anordnung von Öffnungen (25) ist.

14. Turbine mit variabler Geometrie nach einem der vorhergehenden Ansprüche, bei der die radiale Ausdehnung der zweiten Anordnung von Öffnungen (24) die radiale Ausdehnung der ersten Anordnung von Öffnungen (25) überdeckt.

## Revendications

1. Turbine à géométrie variable comprenant une roue de turbine (9) supportée dans un logement (1) d'une manière lui permettant d'effectuer une rotation autour d'un axe, un élément de paroi annulaire (5) mobile axialement monté dans une cavité (19) prévue à l'intérieur du logement (1), un passage d'entrée annulaire (4) s'étendant de manière radiale vers l'intérieur en direction de la roue de turbine (9) et défini entre une face radiale de l'élément de paroi mobile (5) et une paroi opposée du logement, l'élément de paroi mobile (5) pouvant être déplacé axialement par rapport au logement (1) grâce à un actionneur pour faire varier la géométrie de la turbine en faisant varier la largeur axiale du passage d'entrée annulaire (4), une série d'aubes directrices d'entrée (8) s'étendant entre la face radiale de l'élément de paroi mobile (5) et une paroi opposée du logement (1) définissant un passage d'aubes radial, une première série circonférentielle d'ouvertures (25) prévues à travers ladite face radiale de l'élément de paroi mobile (5), chaque ouverture (25) de ladite première série d'ouvertures (25) étant située essentiellement dans le passage d'aubes, et une seconde série circonférentielle d'ouvertures (24), **caractérisée par le fait que** la seconde série d'ouvertures est prévue à travers ladite face radiale de l'élément de paroi mobile (5), chaque ouverture (24) de ladite seconde série d'ouvertures (24) étant située essentiellement en amont ou en aval de ladite première série d'ouvertures (25) par rapport à la direction d'écoulement à travers le passage d'entrée annulaire (4), de manière à ce que le passage d'entrée annulaire (4) et ladite cavité (19) soient en communication fluide à la fois grâce à la première et à la seconde série d'ouvertures (24, 25), dans laquelle les ouvertures (24) sont moins nombreuses dans ladite seconde série (24) que dans ladite première série (25).

2. Turbine à géométrie variable selon la revendication 1, dans laquelle l'élément de paroi mobile (5) peut être déplacé entre une position totalement ouverte et une position totalement fermée, dans laquelle la première et la seconde série d'ouvertures (24, 25) sont toutes les deux en communication fluide avec le passage d'entrée annulaire (4) et avec la cavité (19) pour toutes les positions axiales de l'élément de paroi mobile (5) entre les positions totalement ouverte et totalement fermée.

3. Turbine à géométrie variable selon la revendication 1 ou la revendication 2, dans laquelle chaque ouverture (25) de la première série d'ouvertures (25) est centrée sur un premier rayon et chaque ouverture (24) de ladite seconde série d'ouvertures (24) est centrée sur un second rayon, et dans laquelle le second rayon est supérieur au premier rayon.

4. Turbine à géométrie variable selon la revendication 3, dans laquelle ledit second rayon est supérieur au rayon de l'étendue desdites aubes (8) dans le sens radial vers l'extérieur.

5. Turbine à géométrie variable selon la revendication 1 ou la revendication 2, dans laquelle chaque ouverture (25) de la première série d'ouvertures (25) est centrée sur un premier rayon et chaque ouverture (24) de ladite seconde série d'ouvertures (24) est centrée sur un second rayon, et dans laquelle le second rayon est inférieur au premier rayon.

6. Turbine à géométrie variable selon la revendication 5, dans laquelle ledit second rayon est inférieur au rayon de l'étendue desdites aubes (8) dans le sens radial vers l'intérieur.

7. Turbine à géométrie variable selon l'une quelconque des revendications précédentes, dans laquelle la totalité de la surface de chaque ouverture (25) de ladite première série (25) se situe dans le passage d'aubes.

8. Turbine à géométrie variable selon l'une quelconque des revendications précédentes, dans laquelle chaque ouverture (24) de la seconde série d'ouvertures (24) se situe au moins sensiblement à l'extérieur dudit passage d'aubes.

9. Turbine à géométrie variable selon l'une quelconque des revendications précédentes, dans laquelle la totalité de la surface de chaque ouverture (24) de la seconde série (24) se situe à l'extérieur du passage d'aubes.

10. Turbine à géométrie variable selon la revendication 5, dans laquelle chaque ouverture (24) de la seconde série d'ouvertures (24) se situe au moins sensiblement dans ledit passage d'aubes.

11. Turbine à géométrie variable selon la revendication 10, dans laquelle chaque ouverture (24) de la seconde série d'ouvertures (24) se situe en totalité dans ledit passage d'aubes.

12. Turbine à géométrie variable selon l'une quelconque des revendications précédentes, dans laquelle chaque ouverture (24) de ladite seconde série (24) a une plus petite surface que chaque ouverture (25) de ladite première série (25).

13. Turbine à géométrie variable selon la revendication 12, dans laquelle les ouvertures (24, 25) sont circulaires et le diamètre de chaque ouverture (24) de la seconde série d'ouvertures (24) ne dépasse pas environ 70% du diamètre des ouvertures (25) de la première série d'ouvertures (25).

14. Turbine à géométrie variable selon l'une quelconque des revendications précédentes, dans laquelle l'étendue radiale de la seconde série d'ouvertures (24) se superpose à l'étendue radiale de la première série d'ouvertures (25).
